# EUROPEAN PATENT SPECIFICATION

(11) **EP 1 092 171 B1**
(45) Date of publication and mention of the grant of the patent: **24.09.2003**
(21) Application number: 99967851.9
(22) Date of filing: 15.11.1999
(51) Int. Cl.: G02C 9/00

(54) **A METHOD FOR PRODUCING AN AUXILIARY SPECTACLE LENS**
VERFAHREN ZUR HERSTELLUNG EINER ZUSATZBRILLENLINSE
METHODE DE FABRICATION D'UNE LENTILLE AUXILIAIRE DE LUNETTES

(30) Priority: 17.11.1998 JP 32657098; 08.11.1999 JP 31663599
(43) Date of publication of application: 18.04.2001
(73) Proprietor: MASUNAGA OPTICAL MFG. Co., LTD., Fukui-shi, Fukui 918-8152 (JP)
(72) Inventor: MASUNAGA, Satoru Masunaga Optical Mfg. Co., Ltd., Fukui-shi, Fukui 918-8152 (JP)
(74) Representative: Pearce, Anthony Richmond
(86) International application number: PCT/JP99/06350
(87) International publication number: WO 00/029899

(56) References cited:
- WO-A-97/19384
- DE-A- 19 649 694
- US-A- 4 998 815
- US-A- 5 936 700

## Description

### TECHNICAL FIELD

The present invention relates to a method for producing an auxiliary spectacle lens, and more particularly to a highly efficient method of producing auxiliary spectacle lens which is light in weight and easy to be stably mounted in front of the respective lenses of spectacles in use. This method can be easily performed even in a small optical shop.

### BACKGROUND ART

When spectacle wearers go to places for activity or leisure where the sun shines so harshly that they are exposed to strong ultra-violet rays, or when. they work for a long time in front of a display of office automation equipment, they try to prevent hazardous rays from penetrating into their eyes, for example, by wearing another pair of light-transmission control spectacles over the vision-correction spectacles or by suspending a frame with light-transmission control lenses mounted therein with clips on the frontal part of the frame of their vision-correction spectacles in use.

However, using two spectacle frames bothers the wearer because it increases the weight of the spectacles as a whole. When said frame is suspended on the vision-correction spectacles in use, its weight tends to be lopsided to the frontal part thereof, so that the spectacles become vulnerable to being displaced from their normal position on the face.

In view of such inconveniences as mentioned above, recently, a pair of vision-correction spectacles for correction of vision has been proposed, on the rims of whose frame a certain number of hooks are provided, on which hooks light transmission control lenses are supported. However, it was not popular among the users because those hooks look unshapely and become dangerous objects when said auxiliary lenses are removed therefrom.

Rimless spectacles, having lenses in which holes are bored to receive rod members protruding from a bridge and bracket endpieces so as to hold the lenses in place, have recently become popular with wearers who favor spectacles giving a wide view, and which are light in weight and have a sophisticated design as compared with spectacles whose lenses are mounted in rims surrounding them.

With the above rimless spectacles, said clip-type lens frame can not be directly mounted on the lenses. Even worse, the overlapping of spectacles with light transmission control lenses ruins the shapely design of rimless spectacles.

Furthermore, spectacles to improve both far and near vision which enables the wearers to look at a far sight and to carry out tasks close at hand without changing the glasses, have been favorably received by wearers since a dual focus lens and progressive focus lens with a focus region for far sight and that for near sight integrated therein have been developed. However, in addition to the fact that such lenses are very expensive, their far and near focus regions are narrow. Because of this narrowness of effective field, conventional spectacles of such type can cause eye strain, particularly when doing tasks close at hand, for example, reading, or long vision tasks, such as driving, for long periods of time. Accordingly, there is a tendency to wear vision-correction spectacles exclusively designed for such tasks.

In view of the above-mentioned inconveniences encountered when wearers want to add other optical functions to spectacle lenses in use or switch those lenses with other types thereof, the present invention is to provide a new method for efficiently producing an auxiliary spectacle lens which is light in weight and is easy to be stably mounted in front of the respective lenses of the spectacles in use.

US-A-4998815 discloses a method of producing a sunglass in which a piece of glass formed of resilient plastic material is shape moulded with a slot formed by notches in each side of the glass. A fastening element is engaged in each slot and is connected with a respective one of the spectacle bows.

### DISCLOSURE OF THE INVENTION

According to the present invention, there are provided methods of producing an auxiliary spectacle lens as defined in claim 1 and claim 4.

It enables a function inherent in sunglasses, an infrared rays transmission control means for office automation equipment. and a means to improve the wearers' sight for performing tasks close at hand to be added to the spectacles in use. In order to hold an auxiliary spectacle lens in place against the spectacles in use by means of said connection piece, for example, said auxiliary lens is mounted onto the spectacles in use by inserting an eyelet formed in said connection piece onto a projecting portion of the spectacles in use or by providing a bent portion having a hook member thereon with said joint piece.

The present invention will now be described in further detail with reference to the accompanying drawings.

### BRIEF DESCRIPTION OF THE DRAWINGS

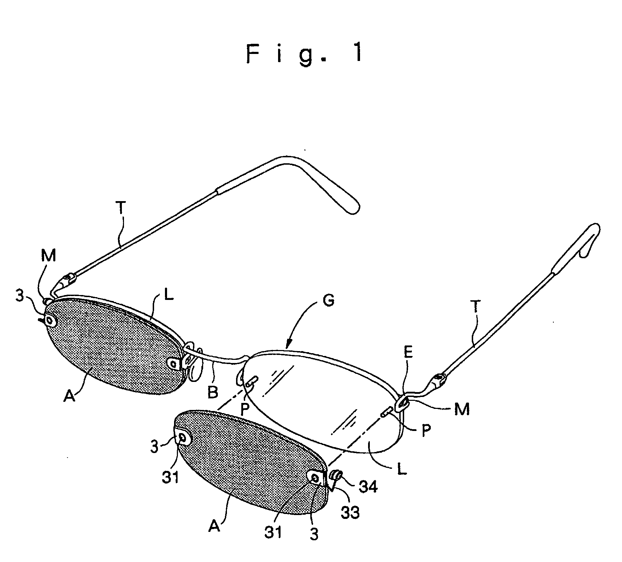

Figures 1 to 6 are views illustrating a first embodiment of the present invention, in which Figure 1 is an explanatory view to show an auxiliary lens obtained by the first embodiment thereof being mounted on spectacles according to US Patent No. 5,585,870 belonging to the present applicant;

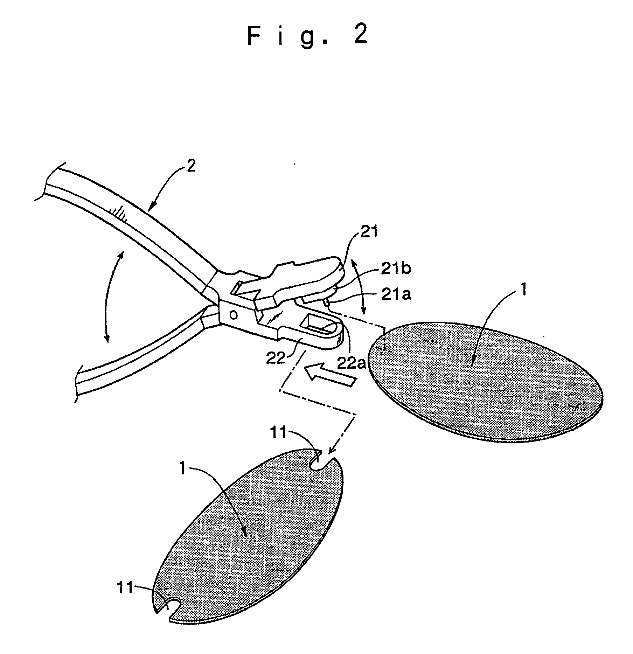

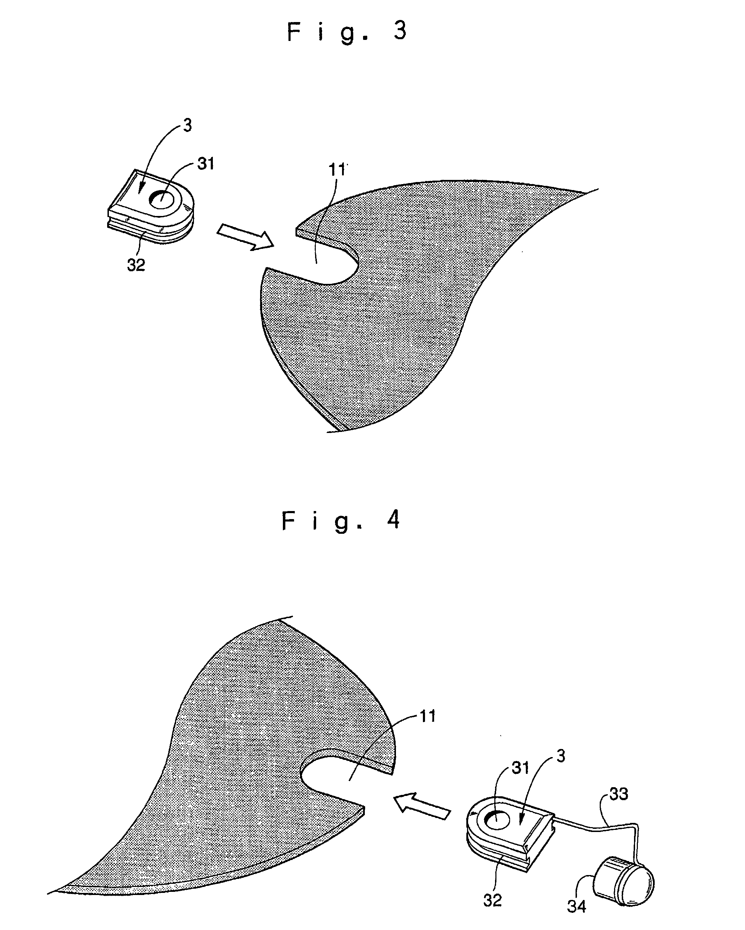

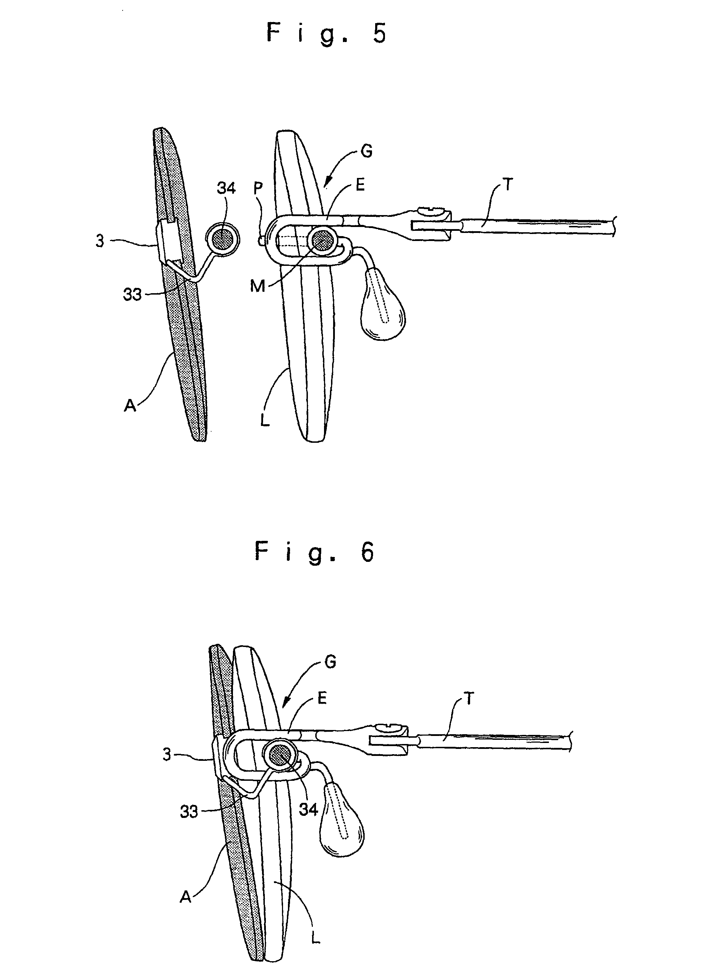

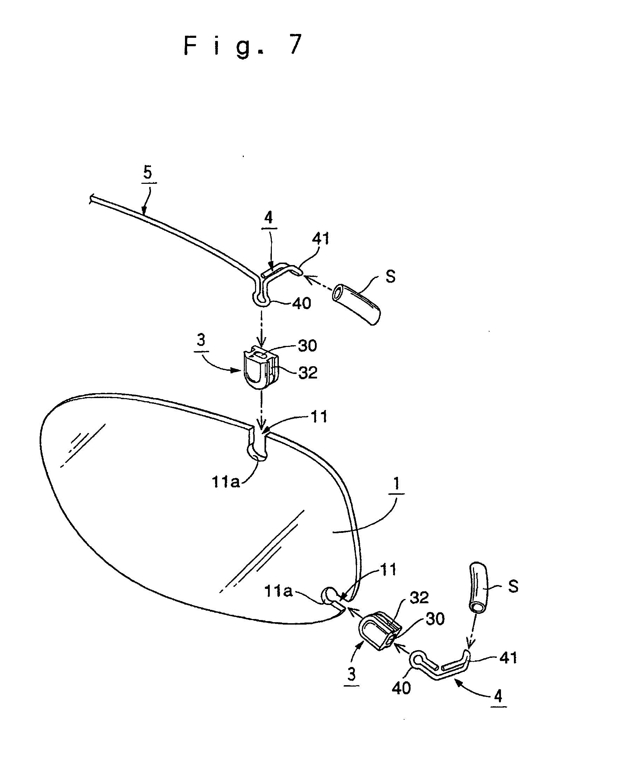

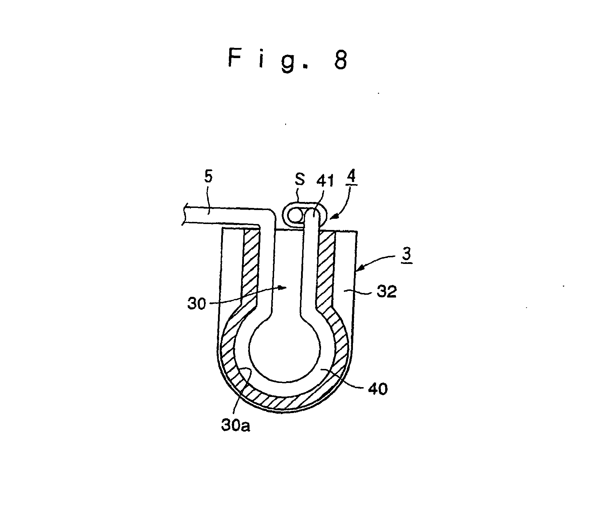

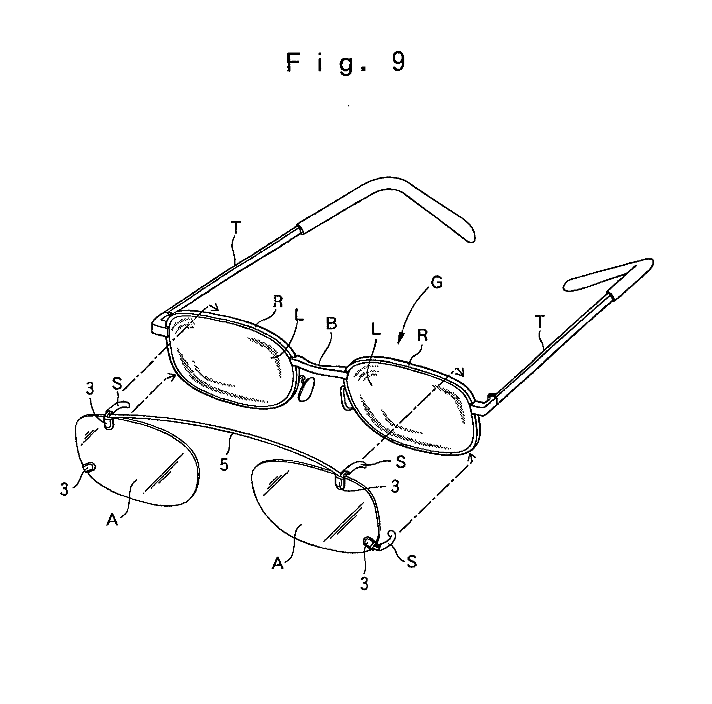

Figure 2 is a perspective view showing the formation of slots in opposite regions of the edge of said auxiliary lens; Figure 3 is a slightly enlarged perspective view to show a connection piece with an eyelet therein being mounted in one of the slots; Figure 4 is a slightly enlarged perspective view to show a connection piece with an extended support arm and magnet provided thereon being inserted into the slot in said auxiliary lens; Figure 5 is a slightly enlarged side view to show said auxiliary lens being mounted on the spectacles by attaching said magnet onto a proximal end portion of the temple of the spectacles; Figure 6 is a slightly enlarged side view seen from a proximal end portion of the temple showing a state where said auxiliary lens is mounted on the spectacles.
Figures 7 to 9 are views illustrating a second embodiment of the present invention, in which Figure 7 is an exploded perspective view showing connection pieces inserted into the slots, hook members inserted into connection pieces, and sleeves covering said hook members; Figure 8 is a sectional view of said connection piece to show how the hook member is inserted into the former; Figure 9 is an exploded perspective view showing a state where the auxiliary lens obtained by the second embodiment is mounted on ordinary spectacles whose lenses are mounted in rims.

Referring now to Figures 1 to 6 of the drawings, and particularly to Figure 2, reference number (1) indicates an auxiliary lens blank molded of acrylic resin containing light transmission control pigment, which resin in the present embodiment contains a well-known ultra-violet rays absorbing compound.

Reference number (2) in Figure 2 indicates a shearing tool of pliers type having a cylindrical pin (21a) to abut a target portion of said auxiliary lens blank (1) to be punched through (the target portion is indicated with a cross mark in Figure 2), and a horseshoe shaped punching tooth (21b) on an inner surface of an upper jaw (21) thereof. On a lower jaw (22) to be engaged with said upper jaw (21), a shearing aperture (22a) is provided to receive said tooth (21b).

The target portions are provided adjacent right and left portions of the edge of the auxiliary lens blank (1) so as to enable slots (11) to be cut into the adjacent regions of the edge of the blank (1) using the shearing tool.

Then, into one of the slots (11), a connection piece (3) of horseshoe shape with an eyelet (31) provided therethrough as shown in Figure 3 is inserted. The connection piece (3) is integrally formed of a hard synthetic resin (acrylic resin) by injection molding. At the tip end portion of said joint piece, the eyelet (31) is provided, and a groove (32) of a width to receive the thickness of said auxiliary lens is provided along the sides and rounded end of the connection piece (3). Thus, the connection piece (3) can be just fitted into the slot (11).

Into the other slot (11), another connection piece (3) with an eyelet (31) provided therethrough as shown in Figure 4 is inserted, so that the auxiliary lens blank (1) is formed into an auxiliary lens (A) - see Figure 1. In the present embodiment, two types of connection piece (3) are used as shown in Figures 3 and 4. The main body portion of the connection piece shown in Figure 4 has the same configuration as that shown in Figure 3. The differences therebetween are the latter has an extended arm (33) formed of wire made of a superelastic alloy (based on nickel-titanium), which arm (33) bends and extends rearwardly from an outer edge of the joint piece, and the free end of said arm (33) is provided with a rare earth magnet (34).

The auxiliary spectacle lens (A) is arranged so that it is mounted on rimless spectacles as described in US Patent No. 5,585,870 belonging to the present application, as shown in Figure 1.

As shown in Figure 1, a pin (P) of a bridge (B) of the Spectacles (G) projects from the ocular side of respective lenses (L) of the spectacles(G) towards the frontal surface thereof while a pin (P) of a bracket endpiece (E) of the spectacles (G) extending from the proximal end portion of a temple (T) of the spectacles (G) projects from the ocular side thereof towards the frontal surface thereof. The former pin (P) is inserted into the hole (31) of the connection piece without being provided with an extended arm (33), while the latter pin (P) is inserted into that of the connection piece provided with such arm (33). Then, the magnet (34) provided at the free end of the extended arm (33) is attached to a magnetic metallic portion (M) at the proximal end portion of the temple (T). Figure 5 shows this magnet (34) attached onto said metallic portion (M).

The magnet (34) mounted on the distal end portion of said arm (33), as shown in Figure 5, is attached to the metallic portion (M) (comprising a magnet of polarity reverse to the magnet (33) of the arm) disposed on the proximal end portion of the temple (T). In this way, the mounting of the auxiliary lenses to the spectacles becomes very stable, as shown in Figure 6, so that there is no possibility that they fall off even if they are subjected to strong vibration.

In the embodiment of Figures 7 to 9, the auxiliary spectacle lens produced by this embodiment is appropriate for being mounted on an ordinary pair of spectacles whose lenses are held by rims (R) surrounding them and are intended for improving a far sight of the wearers.

Reference number (1) in Figures 7 to 9 indicates a pair of auxiliary lens blanks to be disposed in front of the frontal surfaces of the respective lenses of spectacles (G). In this embodiment, a narrow focus lens is adopted for said auxiliary lens blank (1) in order to add stronger degree of correction to that of the spectacle lenses (L). This facilitates wearers of advanced age doing tasks close at hand. A slot (11) is provided on an upper edge portion of this auxiliary lens and another slot (11) is provided on the lower edge portion thereof by means of a shearing tool of substantially the same type as that used in the first embodiment. The shearing tool to be used in this embodiment is arranged so that it can form an enlarged portion (11a) at an inner end of the slot (11), which portion (11a) is a little wider than the remaining part thereof.

Reference number (3) indicates a connection piece made of synthetic resin which is mountable in either of the slots (11) in said auxiliary lens. An opening (30) is formed in the connection piece (3) to receive a projection (40) of a hook member (4) as described below. In this embodiment, a groove (32) to receive the inner edge of the slot extends around the curved end portion and along the sides of the connection of the edge piece thereof. The groove (32) is shallow at the curved end portion of the connection piece so as to coincide with the enlarged portion (11a). At the bottom portion of the opening (30), an enlarged portion (30a) is formed as shown in Figure 8.

The hook member (4) has on its proximal end portion, the projection (40) to be mounted in said opening (30) and has on its distal end portion, a bent portion (41) to be hooked onto the rims of the spectacles (G). The hook member (4) of this embodiment is as shown in Figure 7, the projection (40) and bent portion (41) of which are integrally formed of a length of metallic wire by doubling back the same so as to define a hairpin curve. The tip end of the projection (40) is formed in circular shape so that it coincides with the enlarged portion (30a) of said opening (30). The bent portion (41) is covered with a protection sleeve (S).

Reference number (5) in Figures 7 to 9 indicates a bridge member on both sides of which a pair of the hook members (41) are connected, by way of which hook members, a pair of the auxiliary lenses (1) are symmetrically juxtaposed to each other. The bridge member (5) as shown in Figure 7 communicates with the end portion of the projection (40) of said hook member (4), so that those members are integrally formed of a length of metallic wire.

According to the method of this embodiment, the hook members (4) are mounted on the upper portions of a pair of the auxiliary lenses (1) while those lenses (1) are symmetrically juxtaposed with regard to the frontal surface of the spectacle lenses just by mounting the connection pieces (3) into the respective slots (11) and then forcing the projections (40) of said hook members disposed on both ends of the bridge member (5) into the openings (30) of the connection pieces, while the hook members are mounted on the lower portions of the lenses just by forcing the projections (40) of the hook members into the opening (30) of said connection pieces (3) tightly mounted in the lower slots so as to elastically deform the same.

The auxiliary spectacle lenses (A) produced in this way are easy to mount in front of the lenses (L) of the spectacles (G) in use by suspending the bent portions (41) covered with protection sleeve (S) onto the rims (R) with the bridge member (5) straightened to some extent so as to be elastically deformed.

With the auxiliary spectacle lens produced by the method of this embodiment, as the hook members to be mounted on the rims of the spectacles in use are tightly mounted into the connection pieces inserted into the slots, even if an external force is applied to the mounted lens, the connection pieces readily absorb such force, so that there is no possibility that such force is directly applied to the auxiliary lenses. Therefore, even if external force should concentrate on such lens, it is not easily broken as in the case of previously known auxiliary lenses.

Furthermore, in this embodiment, as the projection (40) of the hook member to be mounted into the opening of the connection piece is made of a metallic wire which is bent to define a hairpin curve, it also serves as a shock-absorber so as to readily absorb such force.

When the auxiliary spectacle lens (A) produced by the method of this embodiment is provided with an enlarged portion (11a) at the bottom portion of the slot notched thereon and the tip end portion of the projection of the hook member is formed in circular shape, it is possible to secure the hook member onto the auxiliary lens so that the former cannot easily become detached from the latter. Therefore, it is durable enough to be put into practical use.

With the auxiliary spectacle lens according to this embodiment, when the hook members and the bridge member are integrally formed of a length of elastically deformable metallic wire by performing the bending operation thereon, it simplifies its structure so as to make it sophisticated and shapely in design.

Moreover, with the auxiliary lens according to this embodiment, when the respective bent portions of the hook members are covered with protection sleeves (S), the bent portions do not damage the lenses (L) of the spectacles in use and the sleeves prevent the bent portions from becoming disengaged from the spectacles, whereby the auxiliary lens is mounted thereon in a stable manner.

The concrete examples of the present invention are substantially described above with reference to the accompanying drawings, but it is not limited to the above embodiments, which can be modified in various manners within the scope of the accompanying claims. The following modified examples are within the technical scope of the present invention.

In the above-mentioned embodiments, an example is shown where a manually operated shearing tool of the pliers type is used, but a punching tool may also be adopted, just provided that a slot (11) can be accurately formed at the required portion of an auxiliary lens blank.

Also, in the first embodiment, an example is shown where a connection piece (3) with an eyelet (31) therein is provided with an extended arm and a magnet, so as to stabilise the auxiliary spectacle lens against the spectacles in use. As a means to restrain the eyelet (31) from becoming disengaged from the pin (P), this hole may be retained on the pin by forming constrictions or lugs on a head portion of the pin so as to be pressed into such constriction. In this respect, this prevention measure may be replaced with known conventional equivalents as known, where appropriate.

### INDUSTRIAL APPLICABILITY

As described above, according to the method of the present invention, because an auxiliary lens which is light in weight and stably mounted in front of the spectacles in use is easily produced in an efficient manner by opening slots on the surface of said lenses and mounting connection pieces in said slots so as to (a) engage a part of said connection piece into a projection protruding from the lens of the spectacles in use, or (b) hang the same onto the frontal part of the spectacles in use, even an optical shop of a small scale can carry out such production simply by means of an inexpensive shearing tool, so that it reduces fixture and equipment cost.

The auxiliary lens worked by the method of this invention is not bulky in shape as in the case of a conventional clip-type auxiliary frame, and can be carried in a small lens holder, so that it is very convenient to use.

According to the present invention, even an optical shop of a small scale can produce such an auxiliary spectacle lens which does not adversely affect the design of the spectacles in use, so that its industrial applicability is very high.

## Claims

1. A method of producing an auxiliary spectacle lens comprising the steps of:
forming a spectacle lens (1) made of synthetic resin with at least one slot (11) in an edge of the lens (1); and
mounting a connection piece (3) into said slot (11),
**characterised in that** said slot (11) is punched in the edge of the auxiliary spectacle lens (11) by means of a shearing tool (2), and **in that** the connection piece (3) has an eyelet (31) therein for mounting the lens, thus, serving as an auxiliary spectacle lens (1) on spectacles in use.

2. A method according to claim 1, wherein the connection piece (3) is provided with an extended arm (33) upon which a magnet (34) is mounted, the connection piece (3) being mounted in either one of a pair of slots (11) formed in the right- and left-hand edges of the auxiliary lens so as to produce an auxiliary spectacle lens which is magnetically attached to a portion of a pair of spectacles in use.

3. A method according to claim 1 or 2, wherein the connection piece (3) is provided with a groove of a thickness to match that of said auxiliary lens in a region of the connection piece (3) which engages the slot (11).

4. A method of producing a pair of auxiliary spectacle lenses comprising the steps of:
forming a pair of lenses (1) of synthetic resin with a slot (11) in an edge of each lens (1) respectively and
engaging a connection piece (3) provided with a bent portion (4) in each slot (11),
**characterised in that** the slots (11) are punched by means of a shearing tool (2), and **in that** each of the bent portions (4) is arranged to be suspended onto a respective one of the lenses (L) of a pair of spectacles so as to form an auxiliary spectacle lens pair to be mounted in front of the lenses (L) of the spectacles in use.

5. A method according to claim 4, wherein the bent portions (4) of the connection pieces (3) are integrally formed with a bridge (5) made of an elastic metallic wire.

## Patentansprüche

1. Verfahren zum Herstellen einer Zusatzbrillenlinse, umfassend die folgenden Schritte:
Bilden einer Brillenlinse (1), die aus synthetischem Harz besteht, mit wenigstens einem Schlitz (11) in einer Kante der Linse (1); und
Einbringen eines Verbindungsstücks (3) in den Schlitz (11) hinein;
**dadurch gekennzeichnet, dass** der Schlitz (11) in die Kante der Zusatzbrillenlinse (11) mit Hilfe eines Scherwerkzeugs (2) gestanzt wird und dass das Verbindungsstück (3) eine Öse (31) darin zum Anbringen der Linse aufweist, so dass sie als eine Zusatzbrillenlinse (1) an Brillen bei der Verwendung dient.

2. Verfahren nach Anspruch 1, wobei das Verbindungsstück (3) mit einem verlängerten Arm (33) versehen ist, auf dem ein Magnet (34) angebracht ist, wobei das Verbindungsstück (3) in einem eines Paars von Schlitzen (11) angebracht ist, die in den rechtsseitigen und linksseitigen Kanten der Zusatzlinse gebildet sind, um so eine Zusatzbrillenlinse zu erzeugen, die magnetisch an einem Abschnitt eines Paars von Brillengläsern bei der Verwendung angebracht ist.

3. Verfahren nach Anspruch 1 oder 2, wobei das Verbindungsstück (3) versehen ist mit einer Ausnehmung einer Dicke zur Anpassung an diejenige der Zusatzlinse in einem Bereich des Verbindungsstücks (3), das in den Schlitz (11) eingreift.

4. Verfahren zum Herstellen eines Paars von Zusatzbrillenlinsen, umfassend die folgenden Schritte:
Bilden eines Paars von Linsen (1) aus synthetischem Harz mit einem Schlitz (11), jeweils in einer Kante jeder Linse (1);
in Eingriff-Bringen eines Verbindungsstücks (3), das mit einem gebogenen Abschnitt (4) versehen ist, in jeden Schlitz (11),
**dadurch gekennzeichnet, dass** die Schlitze (11) mit Hilfe eines Scherwerkzeugs (2) gestanzt werden und dass jeder der gebogenen Abschnitte (4) angeordnet ist, um auf eine jeweilige der Linsen (L) eines Paars von Brillengläsern aufgehängt zu werden, um so ein Zusatzbrillenlinsenpaar zu bilden, das vor den Linsen (L) der Brillengläser bei der Verwendung angebracht werden soll.

5. Verfahren nach Anspruch 4, wobei die gebogenen Abschnitte (4) der Verbindungsstücke (3) einstückig mit einer Brücke (5), die aus einem elastischen metallischen Draht gebildet ist, gebildet sind.

## Revendications

1. Un procédé de fabrication d'une lentille auxiliaire de lunettes comprenant les étapes consistant à:
former une lentille de lunettes (1) constituée de résine synthétique avec au moins une encoche (11) sur un bord de la lentille (1); et
monter une pièce de connexion (3) dans ladite encoche (11),
**caractérisé en ce que** ladite encoche (11) est percée sur le bord de la lentille auxiliaire de lunettes (11) au moyen d'un outil de cisaillement (2), et **en ce que** la pièce de connexion (3) incorpore un oeillet (31) pour le montage de la lentille servant ainsi de lentille auxiliaire de lunettes (1) sur les lunettes lors de l'utilisation.

2. Un procédé selon la revendication 1, dans lequel la pièce de connexion (3) est pourvue d'un bras étendu (33) sur lequel un aimant (34) est monté, la pièce de connexion (3) étant montée dans chacune des deux encoches (11) formées sur les bords du côté gauche et du côté droit de la lentille auxiliaire de manière à réaliser une lentille auxiliaire de lunettes qui est attachée magnétiquement à une partie d'une paire de lunettes lors de l'utilisation.

3. Un procédé selon la revendication 1 ou 2, dans lequel la pièce de connexion (3) est pourvue d'une rainure d'une épaisseur pour s'adapter à celle de ladite lentille auxiliaire dans une région de la pièce de connexion (3) qui s'engage dans l'encoche (11).

4. Un procédé de fabrication d'une paire de lentilles auxiliaires de lunettes comprenant les étapes consistant à:
former une paire de lentilles (1) de résine synthétique avec une encoche (11) sur un bord de chaque lentille (1) respectivement, et
engager une pièce de connexion (3) pourvue d'une portion courbée (4) dans chaque encoche (11),
**caractérisé en ce que** les encoches (11) sont percées au moyen d'un outil de cisaillement (2), et **en ce que** chacune des portions courbées (4) est agencée pour être suspendue sur une des lentilles (L) respective d'une paire de lunettes de manière à former une paire de lentilles auxiliaires de lunettes destinée à être montée en face des lentilles (L) des lunettes lors de l'utilisation.

5. Un procédé selon la revendication 4, dans lequel les portions courbées (4) des pièces de connexion (3) prennent intégralement la forme d'un pont (5) constitué d'un fil métallique élastique.
